# EUROPEAN PATENT APPLICATION

(11) **EP 2 428 114 A1**
(43) Date of publication of application: **14.03.2012**
(21) Application number: 11173629.4
(22) Date of filing: 12.07.2011
(51) Int. Cl.: A01K 15/02, A63B 59/02

(54) **A dual ball launching and retrieving toy**

(30) Priority: 18.08.2010 US 858503
(71) Applicant: Innovative Design & Sourcing, LLC, Milford, CT 06460 (US)
(72) Inventor: McCann, Thomas, Weston, Connecticut 06883 (US)
(74) Representative: Ilgart, Jean-Christophe

(57) **Abstract**

A toy ball launching and retrieving device adapted to hold two balls at one time so that both balls can be launched consecutively from the device and so that each ball can be separately retrieved by said device comprising a handle having a ball engaging and releasing member at each opposite end thereof for separately launching and retrieving each of the two balls with each ball engaging and releasing member comprising a plurality of at least four relatively flexible fingers symmetrically arranged relative to a common base with each finger having a free end and a curvature forming a radial arc in substantial radial alignment with the curvature of a finger disposed opposite thereto such that the curvature of the fingers and common base form a partial spherical space for retaining and releasing a ball and with the spherical space substantially conforming to the geometry of the ball.

## Description

### FIELD OF THE INVENTION:

This invention relates to a toy ball launching and retrieving device adapted for launching two balls consecutively from the device and to independently retrieve each ball using the device without touching the ball.

### BACKGROUND ART:

It is well known that animals, particularly dogs, enjoy playing the game of fetch and, in fact, playing this game provides a dog with needed healthy exercise. However, in playing the game, it is not desirable or recommended to pick up a ball using one's hand when the ball is covered with dog saliva. There are many commercially available toy dog launching devices which will permit a ball to be launched from the device, with some of the devices also including ball engaging means to pick up a ball after the ball is retrieved by a dog. In general, most such devices employ a long pole having some type of ball launching means at one end thereof and ball engaging means which may be independent from the launching means. In all of such device, retrieval of the ball is difficult and the amount of time expended in picking up the ball after it is retrieved by a dog unnecessarily requires substantial time to elapse before another ball can be launched. This loss in time is wasteful and can be disrupting to the game.

A device has been discovered in accordance with the present invention that permits two balls to be thrown consecutively such that after one ball is launched, another may be launched without first reinserting the ball into the device after the ball is retrieved by the dog. This permits one ball which has been retrieved by a dog to be replaced within the device during the interval of time when the dog is chasing after another launched ball, thereby providing continuous play and/or providing greater control over playing the game. In addition, the device of the present invention lends itself to being able to play the game simultaneously with two dogs. Moreover, the device of the present invention permits both balls to be launched consecutively using with the launching of one ball not affecting retention of the other ball in the device. The device of the present invention is also believed to exert minimal strain on the arm of the person launching the ball even after repeated use.

### SUMMARY OF THE INVENTION:

The present invention is directed to a pet toy ball launching and retrieving device adapted to retain two balls at one time in the device in a manner permitting both balls to be thrown consecutively from the device and permitting each ball to be retrieved by the device independent of the launching operation without touching the ball. The ball launching and retrieving device of the present invention comprises a handle having a ball engaging and releasing member at each opposite end thereof for separately launching and retrieving each of the two balls with each ball engaging and retrieving member comprising a plurality of at least four relatively flexible fingers extending from a common base with the fingers being symmetrically arranged relative to the common base and with each finger having a free end and a curvature forming a radial arc such that the curvature of the fingers forms a partial sphere for retaining and releasing a ball therefrom with the geometry of the partial sphere substantially conforming to the geometry of the ball to be launched.

The two ball engaging and releasing members permit each ball to be thrown from the device without affecting the retention of the other ball within the device. It is preferred to use an even number of fingers with each pair in an opposed relationship such that the radial arc formed by one finger is in substantial radial alignment with the radial arc formed by a finger disposed opposite thereto. If an odd number of fingers are used, at least four should preferably have opposing fingers in substantial radial alignment.

In the preferred embodiment of the device, the fingers are relatively flexible and are composed of a composition such as vinyl, with the length of the fingers preferably graduated in size such that the fingers which lie in substantial radial alignment form a pair of fingers having one finger of relatively long length and another finger of relatively short length.

The handle of the device is preferably a hollow member composed of plastic. In one embodiment of the device, the handle is a single member aligned in a straight line (hereafter "straight member") and in another embodiment the handle comprises three sections having one curved section and two straight sections disposed on opposite sides of the curved section. Both embodiments permit a ball to be launched from either end of the device in the same manner using the same hand by simply changing the orientation and grip position of the hand on the handle. The composition of the fingers and handle is preferably of vinyl. The fingers should be symmetrically arranged around a common base which is preferably curved to better grip the ball at each end for launch and retrieval.

In the preferred arrangement of the device each ball engaging and releasing member comprises six symmetrically arranged fingers extending from a common base having a curvature compatible with the curvature of the fingers so that a partial spherical space is formed by the curved fingers and curved base which substantially conforms to the geometry of a ball to be launched and/or retrieved from the device. In the preferred arrangement the fingers and common base in the ball engaging and releasing member are curved to cause a ball to make contact with the surface of the common base when the ball is being retained therein.

In a broader approach, preferred embodiments of the device may include one or more of the following characteristics:
- the number of fingers is in a range of between 4-8 fingers;
- said ball engaging and releasing members include an even number of fingers in a range of between 4-8 fingers, with each finger being in substantial radial alignment with the curvature of a finger disposed opposite thereto;
- said common base has a concave curvature so that each ball engaging and releasing member in combination with the curvature of said common base forms a partial spherical space for engaging a ball which will make contact with the curved surface of the common base when the ball is engaged;
- the number of fingers is six;
- the ball engaging member and the handle are composed of a relatively soft plastic composition;
- the fingers are graduated in length such that the fingers which lie in substantial radial alignment include one finger of long length and a second finger of shorter length;
- the ball engaging member and handle are composed of vinyl;
- the handle is a single straight member;
- the handle comprises a curved center section and two straight sections extending from opposite ends of the curved center section; in such a case, the center section preferably has a curvature causing the two straight sections to be aligned in parallel with respect to each other;
- two of the fingers lying adjacent to the longest finger are substantially of the same length and two of the fingers lying adjacent to the shortest finger are substantially of the same length.
- the two fingers lying adjacent to the shortest finger are aligned on an axis which intersects the axis of the shortest finger.
- each ball engaging and releasing member is oriented so that the fingers are oriented in an opposing relationship at each end of the device.
- the fingers at each opposing end of the device are oriented substantially 180° apart.

### BRIEF DESCRIPTION OF DRAWINGS:

FIG. 1 is a perspective view of the dual ball launching and retrieving toy of the present invention showing a ball engaging and releasing member at each opposite end of the device for independently retrieving and launching a ball shown in dotted lines in each ball engaging and retrieving member;
FIG. 2 is another perspective view of the same dual ball launching and retrieving toy as shown in FIG. 1 oriented in horizontal alignment relative to a horizontal plane through the drawing and rotated approximately 90° from the position shown in FIG. 1 without a ball present at either end of the device;
FIG. 3 is a perspective view of another embodiment of the dual ball launching and retrieving toy of the present invention having a handle located between two ball engaging and releasing members at opposite ends of the device with each ball engaging and releasing member holding a ball, shown in dotted lines, and with the handle having a curved center section and two straight sections extending between the center section and each ball engaging and retrieving member, respectively;
FIG. 4 is another perspective view of the same dual ball launching and retrieving toy as shown in FIG. 3 without a ball present at either end of the device and with the device oriented from the position of FIG. 3 and with each straight section of the handle shown lying in parallel alignment with respect to one another;
FIG. 5 is a end view in elevation of the dual ball launching and retrieving toy shown in FIG. 4;
FIG. 6 is a side view in cross section of the dual ball launching and retrieving toy of FIG. 4; and
FIG. 7 is an exploded view of the dual ball launching and retrieving toy of FIG. 4 showing the handle and each ball engaging and releasing member represented as three separate parts.

### DETAILED DESCRIPTION OF THE INVENTION:

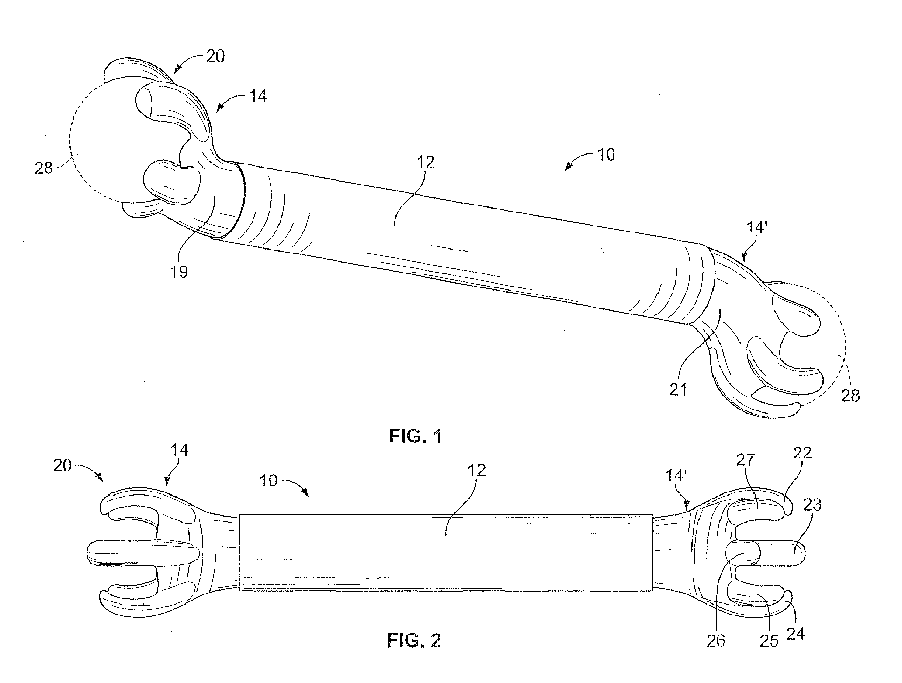

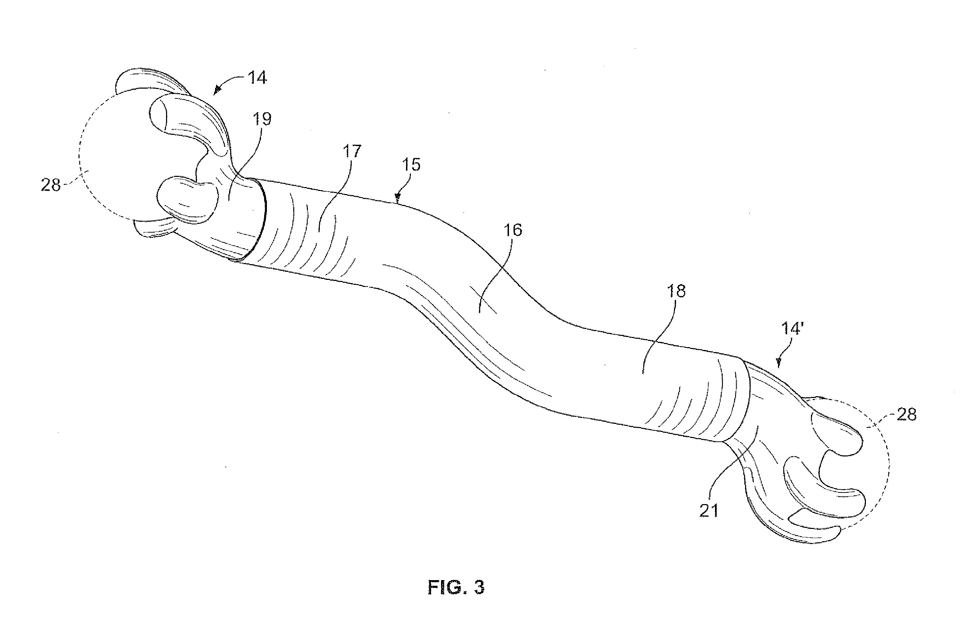

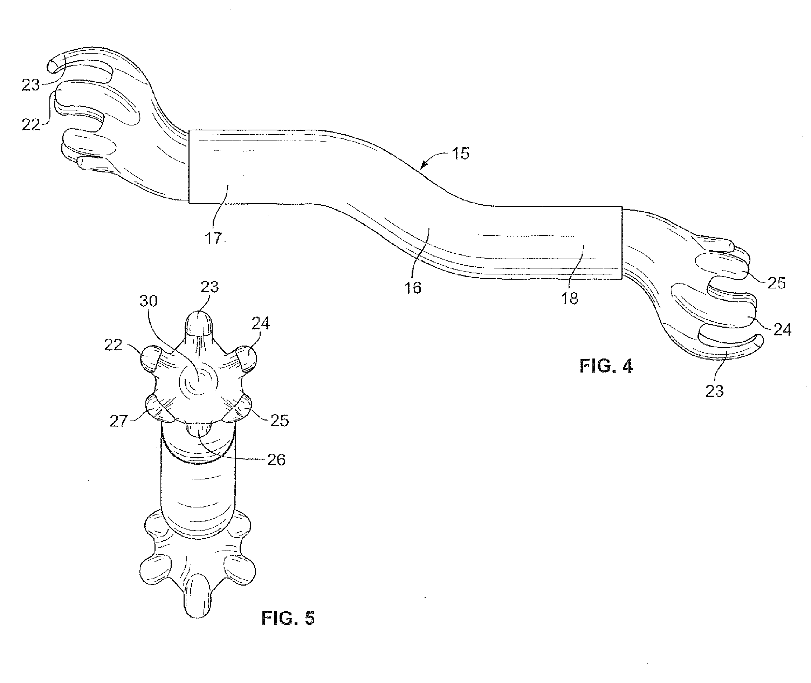

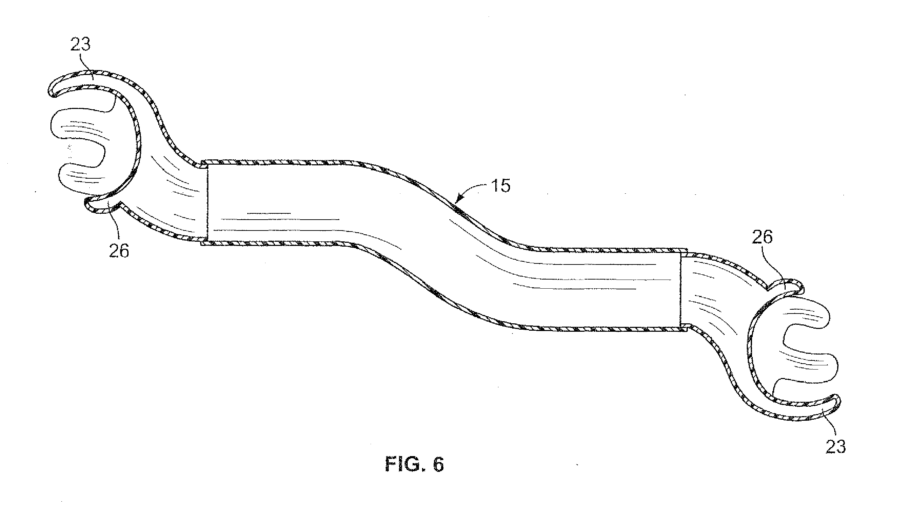

The dual ball launching and retrieving toy device of the present invention is represented by reference numeral 10 in FIGS. 1-7 inclusive, with FIGS. 1 and 2 corresponding to a first embodiment of the present invention and FIGS. 3-7 corresponding to a second embodiment of the present invention. The first embodiment of the device 10 broadly comprises a straight handle 12 connected to a ball engaging and releasing member 14 and 14' at each opposite end thereof. The second embodiment of the present invention comprises a handle 15 having a center section 16 of a curved geometry and two straight sections 17 and 18 respectively with each of the straight sections 17 and 18 connected between the center section 16 and a ball engaging and releasing member 14 and 14', respectively. The same reference numbers are being used to identify corresponding components in each embodiment of the invention.

Each ball engaging and retrieving member 14 and 14' at each opposite end of the device 10 is essentially identical to one another with each comprising a plurality of relatively flexible fingers 20 extending from a neck section 19 and 21, respectively, and with each neck section 19 and 21 being preferably of a cylindrical geometry. At least four relatively flexible fingers are required but six fingers is preferred. The six fingers in the embodiments of FIGS. 1-7 are identified by separate reference numbers 22-27 and extend from a curved base portion 30 in each neck section 19 and 21. In the embodiment of FIGS. 1 and 2 the handle 12 is shown connected between each neck section 19 and 21 and in the embodiment of FIGS. 3-7 the straight section 17 of handle 15 is connected to the neck section 19 and the other straight section 18 is connected to the neck section 21. It is also preferable that the two straight sections 17 and 18 of the handle 15 be aligned in parallel relative to one another. The parallel alignment of the two straight sections 17 and 18 is achieved by the curvature of the center section 16.

Each of the six fingers 22-27 in each ball engaging and retrieving member 14 and 14' has a curved geometry and a free end and forms a radial arc extending from the curved base portion 30. The radial arc should be in substantial radial alignment with the curvature of a finger disposed opposite thereto and preferably of a curvature compatible with the curvature of the base portion 30 so as to form a partial spherical space conforming in geometry to the geometry of a ball 28 adapted to be held in each ball engaging and retrieving member 14 and 14' respectively. In the preferred arrangement the ball 28 makes physical contact with the surface of the curved base portion 30 when residing in the grip of the fingers 22-27. The plurality of fingers 22-27 should be symmetrically arranged about the curved base portion 30.

The length of the fingers 22-27 are preferably graduated in size with one finger 26 having the shortest length and another finger 23 on the opposite side thereof having the longest length. The two fingers 22 and 24 which lie on opposed sides adjacent to the longest finger 23 are substantially equal in length and the two fingers 25 and 27 which lie on opposite sides adjacent the shortest finger 26 are substantially of the same length. Each of the two fingers 25 and 27 which lie on opposite sides adjacent the shortest finger 26 may be aligned askew to the axis of the shortest finger 26 to better grip the ball 28. In such case the two fingers 25 and 27 may extend along axes which intersect the axis of the shortest finger 26 and form a "V" relative thereto.

Each ball engaging and releasing member 14 and 14' is preferably molded as a separate part and is preferably composed of a plastic material composition such as nylon. The fingers 22-27 should be relatively flexible for gripping and releasing the ball 25 from either opposite end of the device 10.

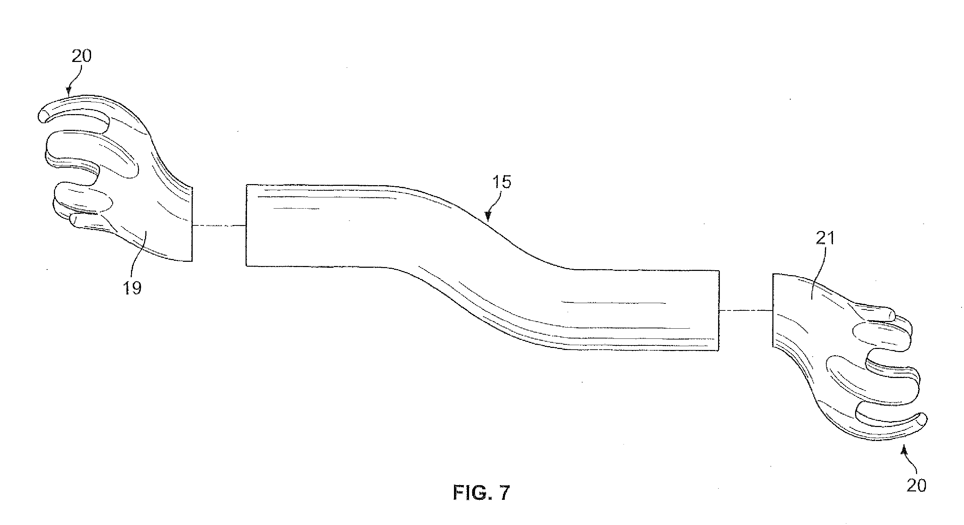

Each handle 12 and 15 is preferably hollow and is also preferably composed of a plastic composition such as vinyl. Handle 15 as shown in FIGS. 3-7 may be separately molded and is attached to each neck section 19 and 21 of each ball engaging and releasing member 14 and 14' as is shown in FIG. 7. The ball engaging member 14 and 14' is preferably oriented in an opposing relationship relative to one another at each opposite end of the device 10 with the fingers in each ball engaging and releasing member 14 and 14' oriented 180° apart from one another. This permits the device 10 to launch one ball 28 from either opposite end of the device 10 without affecting the retention of the other ball 28 at the opposite end of the device 10. This arrangement also simplifies the reversal of the position of the handle 12 to launch a ball from the opposite end. In each embodiment the ball 28 when launched from a ball engaging and releasing member 14 and 14' lies above the grip position of a hand on the handle. In the second embodiment the hand grip on one straight section, e.g., section 17 of the handle 15 must be reversed when gripping the other straight section, e.g., 18 for launching a ball 28 from the opposite side. However, it is not critical for the ball engaging members 14 and 14' to be in an opposing relationship relative to each other. It is the arrangement of the fingers 22-27 in each ball engaging member 14 and 14' which permits each ball to be launched from either end under similar conditions. This arrangement is enhanced when the ball engaging members 14 and 14' are in an opposing relationship.

## Claims

1. A toy ball launching and retrieving device adapted to hold two balls at one time so that both balls can be launched consecutively from the device and for separately retrieving each ball without using the hands to touch either ball comprising a handle having a ball engaging and releasing member at each opposite end thereof for separately launching and retrieving each of the two balls with each ball engaging and releasing member comprising at least four relatively flexible fingers extending from a common base in a symmetrical arrangement relative to the base and with each finger having a free end and a curvature forming a radial arc such that the curvature of the fingers and said common base form a partial spherical space for retaining and releasing a ball therein and with the geometry of the partial spherical space substantially conforming to the geometry of the ball being launched or held by said device.

2. A toy ball launching and retrieving device as defined in claim 1 wherein the number of fingers is in a range of between 4-8 fingers.

3. A toy ball launching and retrieving device as defined in claim 2 wherein said ball engaging and releasing members include an even number of fingers in a range of between 4-8 fingers, with each finger being in substantial radial alignment with the curvature of a finger disposed opposite thereto.

4. A toy ball launching and retrieving device as defined in claim 3 wherein said common base has a concave curvature so that each ball engaging and releasing member in combination with the curvature of said common base forms a partial spherical space for engaging a ball which will make contact with the curved surface of the common base when the ball is engaged.

5. A toy ball launching and retrieving device as defined in claim 4 consisting of six fingers.

6. A toy ball launching and retrieving device as defined in claim 4 wherein the ball engaging member and the handle are composed of a relatively soft plastic composition.

7. A toy ball launching and retrieving device as defined in claim 6 wherein the fingers are graduated in length such that the fingers which lie in substantial radial alignment include one finger of long length and a second finger of shorter length.

8. A toy ball launching and retrieving device as defined in claim 7 wherein the ball engaging member and handle are composed of vinyl.

9. A toy ball launching and retrieving device as defined in claim 7 wherein the handle is a single straight member.

10. A toy ball launching and retrieving device as defined in claim 7 wherein the handle comprises a curved center section and two straight sections extending from opposite ends of the curved center section.

11. A toy ball launching and retrieving device as defined in claim 10 wherein the center section has a curvature causing the two straight sections to be aligned in parallel with respect to each other.

12. A toy ball launching and retrieving device as defined in claim 7 wherein two of the fingers lying adjacent to the longest finger are substantially of the same length and two of the fingers lying adjacent to the shortest finger are substantially of the same length.

13. A toy ball launching and retrieving device as defined in claim 7 wherein the two fingers lying adjacent to the shortest finger are aligned on an axis which intersects the axis of the shortest finger.

14. A toy ball launching and retrieving device as defined in any one of claims 1 to 13 wherein each ball engaging and releasing member is oriented so that the fingers are oriented in an opposing relationship at each end of the device.

15. A toy ball launching and retrieving device as defined in claim 14 wherein the fingers at each opposing end of the device are oriented substantially 180° apart.
